# EUROPÄISCHE PATENTSCHRIFT

(11) **EP 0 974 989 B1**
(45) Veröffentlichungstag und Bekanntmachung des Hinweises auf die Patenterteilung: **23.11.2005**
(21) Anmeldenummer: 99107950.0
(22) Anmeldetag: 22.04.1999
(51) Int. Cl.: H01G 9/042, H01G 9/058, H01M 4/58, H01M 4/66

(54) **Verfahren zum Herstellen einer Elektrode sowie Verwendung dieses Verfahrens zur Herstellung einer Elektrode in einem Elektrolytkondensator oder einer Batterie**
Manufacturing method of an electrode and use of such a method to manufacture an electrode in an electrolytic capacitor or a battery
Méthode de fabrication d'une électrode et utilisation de cette méthode pour la fabrication d'une électrode dans un condensateur électrolytique ou une batterie

(30) Priorität: 20.07.1998 DE 19832355
(43) Veröffentlichungstag der Anmeldung: 26.01.2000
(73) Patentinhaber: Becromal S.p.A., I-20089 Quinto de' Stampi Rozzano (MI) (IT)
(72) Erfinder: Chiavarotti, Giovanni Pietro, 20152 Milano (IT); Constanti, Jean, 78300 Poissy (FR); Vono, Giuseppe, 20090 Pieve Emanuele (IT)
(74) Vertreter: KEIL & SCHAAFHAUSEN Patentanwälte

(56) Entgegenhaltungen:
- EP-A- 0 470 563
- US-A- 5 158 843
- DATABASE WPI Section Ch, Week 199806 Derwent Publications Ltd., London, GB; Class L03, AN 1998-061786 XP002119143 & RU 2 080 678 C (VORON RADIO PARTS WKS STOCK CO), 27. Mai 1997 (1997-05-27)

## Beschreibung

Die Erfindung bezieht sich auf ein Verfahren zum Herstellen einer undurchlässigen Elektrode für Elektrolytkondensatoren, Superkondensatoren oder Batterien.

Auf dem Gebiet der Elektrolytkondensatoren ist es bekannt, Metallfolien als Kathode zu verwenden. Dabei werden die Metallfolien chemisch oder elektro-chemisch geätzt. Die Ätzung dringt in den Materialkörper der Metallfolie ein, wodurch die Oberfläche und damit die spezifische Kapazität der Folie erhöht wird. Aufgrund der Ätzung wird der elektrische Widerstand z.B. einer Aluminiumfolie im Vergleich zu der nicht-geätzten Folie um einen Faktor erhöht, welcher von der Menge des Metalls abhängt, welche bei dem Ätzvorgang entfernt wird. Außerdem verliert die Metallfolie an mechanischer Festigkeit. Die natürlich Oxidation, welche bei dieser Behandlung erfolgt, ergibt eine Kapazität, welche von der Dielektrizitätskonstanten des Metalls selbst und der erfolgten Behandlung der Metallfolie abhängt.

Nach der vorliegenden Erfindung wird der gewünschte Kapazitätswert dagegen durch Ablagerung von Graphit erreicht. Auf diese Weise werden weder der elektrische Widerstand noch die mechanische Festigkeit der Metallfolie beeinträchtigt.

Das Dokument RU 2 080 678 C beschreibt in der zusammenfassung ein Verfahren zum Herstellen einer Elektrode für Elektrolytkondensatoren, wobei Graphit in einem organischen Lösungsmittel auf eine Unterlage abgeschieden wird.

Die Erfindung sieht insbesondere ein einfaches und wirksames Verfahren zur Herstellung einer Elektrode für Elektrolytkondensatoren, Superkondensatoren oder Batterien mit einer undurchlässigen leitenden Schicht aus Graphit vor, welche aus einer Graphit in einer Konzentration zwischen 1 und 50 g/l in einem organischen Lösungsmittel enthaltenden Suspension auf einer Unterlage durch Eintauchen für eine vorgegebene Zeit von 10 bis 60 Sekunden abgeschieden wird, wobei die Unterlage mit der Schicht aus Graphit nach dem Abscheiden bei einer Temperatur zwischen 80 und 150°C für eine vorgegebene Zeit von etwa 1 Minute getrocknet und nach dem Trocknen bei einer Temperatur zwischen 200 und 450°C für eine vorgegebene Zeit von 6 bis 60 Minuten wärmebehandelt wird.

Bei dem Trocknen wird das organische Lösungsmittel, welches als Träger für den Graphit während der Schichtbildung dient, beseitigt. Bei der abschließenden Wärmebehandlung bei erhöhter Temperatur erhält man eine kompakte undurchlässige Niederschlagsschicht aus Graphit, welche die Unterlage bedeckt und an ihr haftet. Aufgrund der Wahl von Temperatur und Dauer der Wärmebehandlung wird die Qualität der Kompaktheit und des Haftvermögens der Schicht bestimmt.

Misst man die Kapazität einer solchen Elektrode in einer Lösung von Ammoniumadipat mit einem Widerstandswert von 15 Ohm.cm und einem pH-Wert von 6,6, so erhält man beachtliche Kapazitätswerte zwischen 100 µF und 5 000 µF.

Vergleicht man bspw. eine in herkömmliches Weise geätzte Kathodenfolie von 50 µm Dicke (Länge der Unterlage: 100 cm; Breite der Unterlage: 4 cm), wie sie üblicherweise in der Kondensatortechnologie eingesetzt wird, mit einer entsprechenden Folie von 30 µcm Dicke, auf welche erfindungsgemäß eine Schicht aus Graphit abgeschieden worden ist, so erhält man folgende Übersicht:

| Dicke der Folie | Technologie | elektrischer Widerstandswert | Kapazität µF/cm² | mechanische Festigkeit |
|---|---|---|---|---|
| 30 µm | erfindungsgemäß hergestellt | 30 mOhm | 1000 | 35 N/cm |
| 50 µm | in üblicher Weise geätzt | 33 mOhm | 440 | 30 N/cm |

Man erkennt, daß mit dem erfindungsgemäßen Verfahren bei erheblich geringerer Folienstärke wesentlich höhere Kapazitätswerte erzielbar sind, und zwar bei niedrigerem elektrischen Widerstand und höherer mechanischer Festigkeit. Erfindungsgemäße Elektroden sind daher den herkömmlichen geätzten Folien weit überlegen. Aufgrund der geringeren Materialstärke der erfindungsgemäßen Elektrode können z.B. bei Verwendung als Kathode in einem Elektrolytkondensator bei gleichem Volumen wesentlich höhere Kapazitätswerte erzielt werden.

Aus der folgenden Tabelle ergibt sich das charakteristische Kapazitätsverhalten bezüglich der Frequenz einer erfindungsgemäßen Elektrode (ca. 20 cm²) im Vergleich zu einer in üblicher Weise geätzten Kathode:

| Frequenz (Hz) | erfindungsgemäß hergestellte Elektrode µF | in üblicher Weise geätzte Kathode µF |
|---|---|---|
| 10 | 80000 | 4400 |
| 20 | 40000 | 4000 |
| 50 | 18000 | 3600 |
| 100 | 9600 | 3400 |
| 1000 | 1100 | 2500 |
| 10000 | 50 | 1010 |

Man erkennt daraus, dass erfindungsgemäß hergestellte Elektroden bei niedrigen Frequenzen von unterhalb etwa 300 Hz wesentlich höhere Kapazitätswerte annehmen. Mit erfindungsgemäßen Elektroden ausgerüstete Kondensatoren eignen sich daher bevorzugt für die Energiespeicherung.

Als Unterlage der erfindungsgemäß hergestellten Elektrode, auf welcher der Graphit abgeschieden wird, dient vorzugsweise eine Metallfolie, z.B. aus Aluminium, oder eine Isolierfolie aus einem Kunststoffmaterial. Bei Verwendung einer Metallfolie verhält sich die Schicht aus Graphit wie eine Kurzschlussschaltung und verhindert jegliche Änderung des ohmschen Widerstands der Unterlage. Ist die Unterlage isolierend, stellt die Schicht aus Graphit einen minimalen elektrischen Widerstand dar.

Die Metallfolie kann vor dem Abscheiden des Graphit unbehandelt bleiben, vorzugsweise wird sie jedoch chemisch oder elektro-chemisch gebeizt und/oder durch mechanische Oberflächenbearbeitung, wie Bürsten, behandelt, um die Wirksamkeit der erfindungsgemäß hergestellten Elektrode weiter zu verbessern.

Die Schicht aus Graphit kann auf einer Seite oder auf beiden Seiten der Unterlage abgeschieden werden.

Als organisches Lösungsmittel für den Graphit kann bspw. Alkohol, eine Mischung aus Alkoholen oder einer CarbonylGruppen aufweisende Substanz enthaltendes Lösungsmittel dienen.

Das Erhitzen der Schicht aus Graphit sollte in einer kontrollierten Atmosphäre oder in einer Inertgasatmosphäre, wie Stickstoff oder Argon, erfolgen.

Die Unterlage für die Abscheidung des Graphits hat vorzugsweise eine Dicke zwischen etwa 15 und 55 µm.

Die Erfindung ist auch auf die Verwendung eines der zuvor geschilderten Verfahren zur Herstellung einer Elektrode gerichtet. Die Verwendung erfolgt, wie bereits erwähnt, vorzugsweise als Kathode eines Elektrolytkondensators für sehr niedrige Frequenzen, welcher eine Anode aufweist, welche eine Oxidschicht mit dielektrischen Eigenschaften trägt, bzw. als Elektrode eines nach dem Prinzip der Helmotzschen Doppelschicht und einer Diffusionsschicht arbeitenden Superkondensators.

Die erfindungsgemäß hergestellte Elektrode kann auch als negative Elektrode einer Batterie eingesetzt werden.

Bei einem Einsatz der Elektrode in einer Graphit-Batterie mit einem Graphitblock und einem negativen Gehäuse dient als Unterlage eine Metallfolie, beide Seiten der Unterlage sind mit einer Schicht aus Graphit belegt und ein Kontakt zwischen dem Graphit-Block und dem negativen Gehäuse ist hergestellt.

Bei der Verwendung einer nach dem erfindungsgemäßen Verfahren hergestellten Elektrode als Elektrode einer Lithium-Batterie dient als Unterlage der Elektrode ebenfalls eine Metallfolie, welche zwischen die Separatoren eingesetzt und mit dem negativen Batterie-Gehäuse verbunden ist.

## Patentansprüche

1. Verfahren zum Herstellen einer undurchlässigen Elektrode für Elektrolytkondensatoren, Superkondensatoren oder Batterien, wobei eine undurchlässige leitende Schicht aus Graphit, welche aus einer Graphit in einer Konzentration zwischen 1 und 50 g/l in einem organischen Lösungsmittel enthaltenden Suspension auf einer Unterlage durch Eintauchen für eine vorgegebene Zeit von 10 bis 60 Sekunden abgeschieden wird und wobei die Unterlage mit der Schicht aus Graphit nach dem Abscheiden bei einer Temperatur zwischen 80 und 150°C für eine vorgegebene Zeit von etwa 1 Minute getrocknet und nach dem Trocknen bei einer Temperatur zwischen etwa 200 und 450°C für eine vorgegebene Zeit von 5 bis 60 Minuten wärmebehandelt wird.

2. Verfahren nach Anspruch 1, **dadurch gekennzeichnet, daß** als Unterlage eine Metallfolie, z.B. Aluminiumfolie, oder eine Isolierfolie aus einem Kunststoffmaterial dient.

3. Verfahren nach Anspruch 2, **dadurch gekennzeichnet, daß** die Metallfolie vor dem Abscheiden des Graphit unbehandelt gehalten, chemisch oder elektro-chemisch gebeizt und/oder durch mechanische Oberflächenbearbeitung, wie Bürsten, behandelt wird.

4. Verfahren nach einem der vorhergehenden Ansprüche, **dadurch gekennzeichnet, daß** die Schicht aus Graphit auf einer Seite oder auf beiden Seiten der Unterlage abgeschieden wird.

5. Verfahren nach einem der vorhergehenden Ansprüche, **dadurch gekennzeichnet, daß** als organisches Lösungsmittel für den Graphit ein Alkohol, eine Mischung aus Alkoholen oder ein eine Carbonylgruppen aufweisende Substanz enthaltendes Lösungsmittel dient.

6. Verfahren nach einem der vorhergehenden Ansprüche, **dadurch gekennzeichnet, daß** das Erhitzen der Schicht aus Grahphit in einer kontrolliertän Atmosphäre oder einer Inertgasatmosphäre, wie Stickstoff oder Argon, erfolgt.

7. Verfahren nach einem der vorhergehenden Ansprüche, **dadurch gekennzeichnet, daß** die Unterlage eine Dicke zwischen etwa 15 und 55 µm hat.

8. Verwendung des Verfahrens nach einem der Ansprüche 1 bis 7 zur Herstellung einer Kathode eines Elektrolytkondensators, welcher eine Anode aufweist, welche eine Oxidschicht mit dielektrischen Eigenschaften trägt, bzw. als Elektrode eines nach dem Prinzip der Helmotzschen Doppelschicht und einer Diffusionsschicht arbeitenden Superkondensators.

9. Verwendung des Verfahrens nach einem der Ansprüche 1 bis 7 zur Herstellung einer negativen Elektrode einer Batterie.

10. Verwendung nach Anspruch 9 zur Herstellung einer Elektrode einer Graphit-Batterie mit einem Graphit-Block und einem negativen Gehäuse, wobei als Unterlage eine Metallfolie dient, beide Seiten der Unterlage mit einer Schicht aus Graphit belegt sind und ein Kontakt zwischen dem Graphit-Block und dem negativen Gehäuse hergestellt ist.

11. Verwendung nach Anspruch 9 zur Herstellung einer Elektrode einer Lithium-Batterie, wobei als Unterlage eine Metallfolie dient, welche zwischen die Separatoren eingesetzt und mit dem negativen Batterie-Gehäuse verbunden ist.

## Claims

1. A method of manufacturing an impermeable electrode for electrolytic capacitors, supercapacitors or batteries, in which an impermeable conductive graphite layer is deposited on a substrate from a suspension comprising graphite in a concentration of between 1 and 50 g/l in an organic solvent by immersing said substrate in said suspension for a given time of 10 to 60 seconds, and after the layer of graphite has been deposited on the substrate, said substrate with graphite layer is dried at a temperature of between 80 and 150°C for a given time of approximately 1 minute and, after drying, is heat-treated at a temperature of between 200 and 450°C for a given time of 5 to 60 minutes.

2. A method according to Claim 1, **characterized in that** a metal foil, e.g. aluminium foil, or an insulating foil made of a plastic material serves as the substrate.

3. A method according to Claim 2, **characterized in that,** prior to the procedure for depositing the graphite, the metal foil is left untreated, is chemically or electrochemically etched and/or is given a mechanical surface treatment, such as brushing.

4. A method according to one of the preceding claims, **characterized in that** the layer of graphite is deposited on one side or on both sides of the substrate.

5. A method according to one of the preceding claims, **characterized in that** an alcohol, a mixture of alcohols or a solvent containing a substance having carbonyl groups serves as organic solvent for the graphite.

6. A method according to one of the preceding claims, **characterized in that** heating of the layer of graphite is conducted in a controlled atmosphere or an inert-gas atmosphere, such as nitrogen or argon.

7. A method according to one of the preceding claims, **characterized in that** the substrate has a thickness of between approximately 15 and 55 µm.

8. Use of the method according to one of Claims 1 to 7 for manufacturing a cathode of an electrolytic capacitor having an anode bearing an oxide layer with dielectric properties, or for manufacturing an electrode of a supercapacitor operating according to the principle of the Helmholtz double layer and a diffusion layer.

9. Use of the method according to one of Claims 1 to 7 for manufacturing a negative electrode of a battery.

10. Use according to Claim 9 for the manufacture of an electrode of a graphite battery having a graphite block and a negative housing, a metal foil serving as the substrate, both sides of the substrate being coated with a layer of graphite, and a contact being established between the graphite block and the negative housing.

11. Use according to Claim 9 for the manufacture of an electrode of a lithium battery, a metal foil serving as the substrate which is inserted between the separators and connected to the negative battery housing.

## Revendications

1. Procédé pour la fabrication d'une électrode imperméable pour des condensateurs électrolytiques, des supercondensateurs ou des batteries, une couche de graphite conductrice imperméable étant prévue, laquelle couche est déposée en plongeant un support dans une suspension de graphite ayant une concentration comprise entre 1 et 50 g/l dans un solvant organique durant un temps prédéterminé compris entre 10 et 60 secondes, et le support avec la couche de graphite, après le dépôt, est séché à une température comprise entre 80 et 150 °C pendant une durée d'environ 1 minute et après le séchage traité à chaud à une température comprise entre environ 200 et 450 °C pendant une durée de 5 à 60 minutes.

2. Procédé selon la revendication 1, **caractérisé en ce qu'**une feuille métallique, par exemple une feuille d'aluminium, ou une feuille isolante réalisée dans un matériau plastique sert de support.

3. Procédé selon la revendication 2, **caractérisé en ce que** avant le dépôt de graphite, la feuille métallique est maintenue non traitée, est mordue chimiquement ou électrochimiquement et/ou est traitée par traitement de surface mécanique, tel que par brossage.

4. Procédé selon l'une des revendications précédentes, **caractérisé en ce que** la couche de graphite est déposée d'un côté ou des deux côtés du support.

5. Procédé selon l'une des revendications précédentes, **caractérisé en ce qu'**un alcool, un mélange d'alcools ou un solvant contenant une substance présentant un groupe carbonyle sert comme solvant organique pour le graphite.

6. Procédé selon l'une des revendications précédentes, **caractérisé en ce que** le chauffage de la couche de graphite est réalisé sous atmosphère contrôlée ou sous atmosphère d'un gaz inerte, tel que l'azote ou l'argon.

7. Procédé selon l'une des revendications précédentes, **caractérisé en ce que** le support a une épaisseur comprise entre 15 et 55 µm.

8. Utilisation du procédé selon l'une des revendications 1 à 7 pour la fabrication d'une cathode d'un condensateur électrolytique, lequel est muni d'une anode qui porte une couche d'oxyde ayant des propriétés diélectriques, ou d'une électrode d'un supercondensateur travaillant selon le principe de la double couche de Helmholtz et d'une couche de diffusion.

9. Utilisation du procédé selon l'une des revendications 1 à 7 pour la fabrication d'une électrode négative d'une batterie.

10. Utilisation selon la revendication 9 pour la fabrication d'une électrode d'une batterie au graphite avec un bloc graphite et un boîtier négatif, une feuille métallique servant de support, les deux côtés du support étant recouvert d'une couche de graphite et un contact étant créé entre le block graphite et le boîtier négatif.

11. Utilisation selon la revendication 9 pour la fabrication d'une électrode d'une batterie au lithium, une feuille métallique servant de support, laquelle étant disposée entre les séparateurs et étant reliée au boîtier de batterie négatif.
